# EUROPÄISCHE PATENTSCHRIFT

(11) **EP 3 218 910 B1**
(45) Veröffentlichungstag und Bekanntmachung des Hinweises auf die Patenterteilung: **28.04.2021**
(21) Anmeldenummer: 15797267.0
(22) Anmeldetag: 29.10.2015
(51) Int. Cl.: H01G 2/10, H01M 2/06

(54) **DURCHFÜHRUNG**
FEED-THROUGH
TRAVERSÉE

(30) Priorität: 11.11.2014 DE 102014016600
(43) Veröffentlichungstag der Anmeldung: 20.09.2017
(73) Patentinhaber: SCHOTT AG, 55122 Mainz (DE)
(72) Erfinder: HARTL, Helmut, 1210 Wien (AT)
(74) Vertreter: Sawodny, Michael-Wolfgang
(86) Internationale Anmeldenummer: PCT/EP2015/075065
(87) Internationale Veröffentlichungsnummer: WO 2016/074932

(56) Entgegenhaltungen:
- EP-A2- 2 371 419
- DE-A1-102012 005 220
- JP-A- S5 842 170
- US-A- 3 600 017
- US-A1- 2014 212 741

## Beschreibung

Die Erfindung betrifft ein Gehäuse oder Gehäuseteil mit einer Durchführung durch das Gehäuse oder Gehäuseteil eines Gehäuses, insbesondere einer Speichereinrichtung, bevorzugt einer Batterie oder eines Kondensators, wobei das Gehäuse aus einem Leichtmetall, bevorzugt aus Aluminium, einer Aluminiumlegierung, AlSiC, Magnesium oder einer Magnesiumlegierung, Titan oder einer Titanlegierung besteht.

Als Speichereinrichtungen, insbesondere Batterien im Sinne der Erfindung, werden sowohl eine Einwegbatterie, die nach ihrer Entladung entsorgt und/oder recycelt werden kann, wie auch Akkumulatoren verstanden. Akkumulatoren, bevorzugt Lithium-Ionen-Batterien, sind für verschiedene Anwendungen vorgesehen wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydrid-Batterien ersetzen.

Lithium-Ionen-Batterien sind seit vielen Jahren bekannt. Diesbezüglich wird beispielsweise auf "Handbook of Batteries", David Linden, Herausgeber, 2. Auflage, McCrawhill, 1995, Kapitel 36 und 39 verwiesen.

Verschiedene Aspekte von Lithium-Ionen-Batterien sind in einer Vielzahl von Patenten beschrieben.

Beispielsweise seien genannt:
US 961,672, US 5,952,126, US 5,900,183, US 5,874,185, US 5,849,434. US 5,853,914 sowie US 5,773,959.

Lithium-Ionen-Batterien, insbesondere für Anwendungen in einer Automobilumgebung, weisen in der Regel eine Vielzahl von einzelnen Batteriezellen auf, die miteinander in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden.

Insbesondere für die Anwendung von Lithium-Ionen-Batterien in der Automobilumgebung muss eine Vielzahl von Problemen wie Korrosionsbeständigkeit, Beständigkeit bei Unfall oder Schwingungsfestigkeit gelöst werden. Ein weiteres Problem ist die hermetische Dichtheit über einen langen Zeitraum.

Die Dichtheit beeinträchtigen können z. B. Undichtigkeiten im Bereich der Elektrode der Batteriezelle bzw. der Elektrodendurchführung in der Batteriezelle. Derartige Undichtigkeiten könnten beispielsweise hervorgerufen werden durch Temperaturwechselbelastungen und mechanische Wechselbelastungen wie beispielsweise Vibrationen im Fahrzeug oder die Alterung des Kunststoffes.

Ein Kurzschluss oder Temperaturänderung der Batterie bzw. Batteriezelle kann zu einer verminderten Lebensdauer der Batterie bzw. Batteriezelle führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird.

Der Stromanschluss bzw. die Elektrode sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über die Lebensdauer.

Die Stromdurchführungen sind bei den Lithium-Ionen-Batterien gemäß dem Stand der Technik somit nicht hermetisch dicht in beispielsweise das Deckelteil der Lithium-Ionen-Batterie eingebaut. So wird im Stand der Technik in der Regel bei einem Druckunterschied von 1 bar eine Helium-Leckrate von maximal 1 · 10⁻⁶ mbar I s⁻¹, abhängig von den Prüfvorgaben, erreicht. Des Weiteren sind die Elektroden verquetscht und lasergeschweißte Verbindungsbauteile mit zusätzlichen Isolatoren sind im Raum der Batterie angeordnet.

Aus der WO 2012/167921, der WO 2012/110242, der WO 2012/110246, der WO 2012/110244 sind Durchführungen, die durch ein Gehäuseteil eines Gehäuses für eine Speichereinrichtung hindurchgeführt werden bekannt geworden. In den Durchführungen wird ein Querschnitt in einem Glas- oder Glaskeramikmaterial durch die Öffnung hindurchgeführt.

Bei Verwendung in einer Speichereinrichtung sind in der Regel zwei Durchführungen mit Leitern vorgesehen, nämlich wenigstens ein Leiter, der als Kathode und wenigstens ein weiterer Leiter, der als Anode der elektrochemischen Zelle dient. Die Materialien der Anode bzw. Kathode unterscheiden sich voneinander, so wird für den stiftförmigen Leiter Kupfer oder eine Kupferlegierung verwandt, wenn der stiftförmige Leiter an eine Kathode der elektrochemischen Zelle bzw. Batteriezelle angeschlossen wird und Aluminium (Al) oder einer Aluminiumlegierung, wenn der Leiter an eine Anode angeschlossen wird. Auch andere Materialien sind möglich, wie in der WO 2012/167921 beschrieben, deren Offenbarungsgehalt voll umfänglich in die vorliegende Anmeldung mit aufgenommen wird.

Bei der elektrochemischen Zelle der WO 2012/167921 besteht das Problem, dass der Außenanschluss der Speichereinrichtung bzw. Batteriezelle zwei unterschiedliche Materialien umfasst, was insbesondere bei einer Zusammenschaltung mehrerer Batteriezellen nachteilig ist.

Aufgabe der Erfindung ist somit, eine Durchführung anzugeben, die die Probleme des Standes der Technik vermeidet.

Die EP 2 371 419 A2 zeigt eine elektrische Durchführung eines Kondensators für medizinische Implantate sowie Verfahren zur Herstellung und Verwendung eines solchen. Zwar ist in der EP 2 371 419 A2 beschrieben, dass der Anschlussstift aus zwei Stiftabschnitten besteht, einem ersten Stiftabschnitt aus Pt, Pt/Ir, FeNi, FeNiCo, FeCr, Nb, Ta, Mo, W, Cr, FeCr, V oder Fi und einem zweiten Stiftabschnitt, der Aluminium umfasst. Allerdings ist für den ersten Stiftabschnitt Cu als Material in der EP 2 371 419 A2 nicht genannt. Desweiteren sind in der EP 2 371 419 A2 keine Werte für den thermischen Ausdehnungskoeffizienten α angegeben. Zudem kann mit den in der EP 2 371 419 A2 genannten Gläsern eine hermetisch dichte Durchführung nicht erreicht werden, da die thermische Ausdehnung der Gläser hierfür zu klein sind.

Die DE 10 2013 006 463 beschreibt eine Durchführung für eine Batterie, insbesondere eine Lithium-Ionen-Batterie, allerdings besteht der stiftförmige Leiter aus einem einzigen Material Die DE 10 2012 005 220 A1 beschreibt eine Batteriedurchführung, insbesondere für eine Lithium-Ionen-Batterie, bevorzugt einen Lithium-Ionen-Akkumulator, eine Speichereinrichtung, insbesondere eine Batterie, bevorzugt eine Lithium-Ionen-Batterie sowie die Verwendung einer Glaszusammensetzung zur Durchführung eines metallischen Leiters in das Gehäuse einer Batterie, insbesondere einer Lithium-Ionen-Batterie.

Die US 2014/212741 A1 offenbart einen Leiter für eine elektrochemische Batterie, welcher zwei Abschnitte aufweist, einen ersten zur Außenseite hingerichteten Abschnitt aus einem Leichtmetall, und einen zweiten zur Innenseite hingerichteten Abschnitt aus Kupfer.

Erfindungsgemäß wird die Aufgabe durch ein Gehäuse oder Gehäuseteil mit einer Durchführung nach Anspruch 1 gelöst. derartige Ausgestaltung löst das Problem, dass, wenn der stiftförmige Leiter an eine Kathode der elektrochemischen Zelle bzw. Batteriezelle angeschlossen wird und aus Kupfer besteht, auf der Außenseite aus einem anderen Material, beispielsweise Aluminium, bestehen kann.

Dies hat den Vorteil, dass man mehrere Batteriezellen sehr leicht zusammenschalten kann, beispielsweise dadurch, dass man die Leiter der einzelnen Zellen miteinander durch ein gemeinsames Bauteil, beispielsweise eine Aluminiumplatte, verbindet. Des Weiteren wird durch das Verlegen der Übergangsstelle der unterschiedlichen Leitermaterialien in dem Bereich des Glas-oder Glaskeramikmaterials eine Kontaktkorrosion vermieden, die auftreten kann, wenn die Übergangsstelle außerhalb der Batteriezelle vorliegt oder aber auch innerhalb der Batteriezelle. Die Kontaktkorrosion wird insbesondere deswegen verhindert, weil die Durchführung im Bereich des Glases oder der Glaskeramik hermetisch dicht ist. Hermetisch dicht heißt vorliegend, dass bei einem Druckunterschied von 1 bar eine Helium-Leckrate von maximal 1 · 10⁻⁸ mbar s⁻¹ vorliegt, d.h. die Helium-Leckrate bei allen möglichen Prüfbedingungen stets geringer als 1 · 10⁻⁸ mbar l s⁻¹ ist. Die hermetische Dichtheit stellt sicher, dass die Übergangsstelle isoliert und vor Korrosion geschützt ist. Die hermtische Dichtheit wird dadurch erreicht, dass es sich bei der Einglasung des Leiters um eine Druckeinglasung handelt. Eine Druckeinglasung im Gegensatz zu einer angepassten Einglasung wird dann erreicht wenn der thermische Ausdehnungskoeffizient des Gehäusematerials sowie des Leitermaterials unterschiedlich zu dem des Glasmaterials ist. Hierbei ist der thermische Ausdehnungskoeffizient des Glasmaterials niedriger als der des Gehäusematerials, so dass vom Gehäusematerial ein Druck auf das Glasmaterial aufgebaut werden kann.

Das erste Material des Leiters, an der Außenseite des Leiters, der in die Zelle geführt wird, angeordnet ist, ist, wie zuvor beschrieben, ein Leichtmetall, insbesondere Aluminium, eine Aluminiumlegierung, AlSiC, aber auch Magnesium, eine Magnesiumlegierung oder ein anderes Metall. Der Vorteil der Wahl des ersten Materials als Leichtmetall, insbesondere Aluminium oder einer Aluminiumlegierung, ist die leichte Schweißbarkeit mit dem Verbindungsmaterial, das bevorzugt ebenfalls Aluminium oder eine Aluminiumlegierung ist, sowie das niedrige Gewicht.

Das zweite, nach innen gerichtete Material, d. h. das Material des Leiter- bzw. Stiftabschnittes, der in die Batterie ragt, ist Kupfer oder eine Kupferlegierung.

Vorliegend ist die Kathode der Pluspol der Batterie, da bei einer Batterie elektrische Energie auf Kosten einer anderen Energie - hier der chemischen Energie, gewandelt wird. Um zu vermeiden, dass aufgrund der unterschiedlichen Materialien der Stift an Luft korrodiert, ist vorgesehen, dass der Übergang von erstem und zweitem Material im Bereich des Glas- oder Glaskeramikmaterials liegt. In einer ersten Ausgestaltung der Erfindung ist vorgesehen, dass das Glaskeramikmaterial, das den zweigeteilten Stift einschließlich des Übergangs umgibt, ein einziges Material ist, wobei dieses Material derart ausgewählt wird, dass es sowohl auf das Material des ersten Abschnitts wie auch auf das Material des zweiten Abschnitts in seinem thermischen Ausdehnungskoeffizienten abgestimmt ist.

Das Material des Gehäuses in dessen Öffnung der Leiter eingeglast wird ist ein Leichtmetall, bevorzugt Aluminium, eine Aluminiumlegierung, AlSiC, Magnesium oder eine Magnesiumlegierung, Titan oder eine Titanlegierung.

Ganz besonders bevorzugt ist Aluminium oder eine Aluminiumlegierung. Bevorzugt handelt es sich bei dem Aluminium bzw. der Aluminiumlegierung für das Gehäuse um ein solches bzw. eine solche das bzw. die sich durch eine hohe Festigkeit auszeichnen.

In einer alternativen Ausgestaltung kann vorgesehen sein, dass nicht nur der Leiter, sondern auch das Glas- oder Glaskeramikmaterial ebenfalls aus zwei Materialien besteht und so beispielsweise einen Glasverbund ergibt, wobei das erste Glasmaterial auf den thermischen Ausdehnungskoeffizienten des ersten Abschnitts des Leiters und das zweite Glasmaterial auf den thermischen Ausdehnungskoeffizienten des zweiten Glasmaterials abgestimmt ist.

Das Abstimmen der Glasmaterialien soll vorliegend so erfolgen, dass zum einen aufgrund des Kompressionsdruckes des Glasmaterials eine zuverlässige hermetische Dichtheit zur Verfügung gestellt wird, zum anderen Risse in der Einglasung vermieden werden.

Besonders bevorzugt sind Glasmaterialien, die nachfolgende Komponenten in mol-% umfassen:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Bevorzugt wird das Glasmaterial so augewählt, dass es einen Ausdehnungskoeffizienten α im Bereich 20° C bis 300° C ≥ 13 ·10⁻⁶/K, bevorzugt im Bereich 13 ·10⁻⁶/K bis 25 ·10⁻⁶/K, insbesondere im Bereich 13 ·10⁻⁶/K bis 23 ·10⁻⁶/K, bevorzugt 13 ·10⁻⁶/K bis 20 ·10⁻⁶/K, insbesondere 13 ·10⁻⁶/K bis 19 ·10⁻⁶/K insbesondere bevorzugt 13 ·10⁻⁶/K bis 18 ·10⁻⁶/K aufweist. Eine derartige Wahl des Ausdehnungskoeffizienten für das Glasmaterial ist zum Erhalt einer Druckeinglasung erforderlich, wenn das Gehäusematerial beispielsweise Aluminium oder eine Aluminiumlegierung ist und das Stiftmaterial des ersten Bereiches des Leiters, bevorzugt an dessen Außenseite Aluminium ist und das Material des zweiten Bereiches an dessen Innenseite Kupfer ist. In einem solchen Fall wird α zwischen 13 ·10⁻⁶/K und weniger als 20 ·10⁻⁶/K gewählt. Da der Ausdehnungskoeffizient von Aluminium ungefähr 23 ·10⁻⁶/K ist, übt das Aluminium insbesondere von Seiten des Gehäuses auf ein derartiges Glasmaterial einen Kompressionsdruck und damit die Einglasung des Stiftes aus. Da der Ausdehungskoeffizient von Cu ungefähr bei 18 ·10⁻⁶/K liegt, erwartet man, dass die Verwendung eines Glasmaterials mit α < 18 ·10⁻⁶/K dazu führt, dass der Leiter bzw. Kontaktstift beim Einglasen wegschrumpft und keine hermetische Dichtheit der Einglasung zum Leiter bzw. Kontaktstift gegeben ist. Überraschenderweise wurde aber festgestellt, dass eine hermetisch dichte Druckeinglasung auch dann erhalten wird, wenn die Glaszusammensetzung ein α < 18 ·10⁻⁶/K, bevorzugt 15 ·10⁻⁶/K bis 17 ·10⁻⁶/K aufweist. Die hermetische dichte Durchführung wird nicht nur zum zweiten Abschnitte des Leiters aus Kupfer, sondern auch zum ersten Abschnitt aus Aluminium mit einem α von 23 ·10⁻⁶/K erhalten. Zum Aluminium hin ist der Unterschied bzw. mismatch des Ausdehnungskoeffizienten des Glasmaterials noch signifikant größer als zum Kupfer.

Besonders bevorzugt ist es, wenn das Glasmaterial der Durchführung mit einer Abdeckschicht abgedeckt bzw. versehen ist. Die Abdeckschicht kann unterschiedliche Gestalt aufweisen. Zum einen kann die Abdeckschicht ein Glasmaterial umfassen in Form einer Glasschicht, insbesondere einer Deckglasschicht oder aber eine Kunststoffschicht sein oder eine Barrierebeschichtung oder eine Kombination aus mehreren der vorgenannten Schichten. Durch das Aufbringen der Abdeckschicht auf das Glasmaterial, in das der Leiter eingeglast ist, wird sichergestellt, dass das Glasmaterial der Einglasung weder von dem Elektrolyten, beispielsweise Flusssäure, angegriffen wird, noch korrodiert, was beispielsweise bei weniger wasserbeständigen Phosphatgläsern wichtig ist.

Des Weiteren kann in einer ganz besonders bevorzugten Ausführungsform vorgesehen sein, dass das Gehäuseteil so dünn als möglich ausgebildet ist und lediglich im Bereich der Durchführung ein Verstärkungsteil bzw. ein Verstärkungsbereich ausgebildet wird, um den notwendigen Kompressionsdruck aufzubringen. Hierdurch können insbesondere Materialkosten eingespart werden.

Bevorzugt wird die erfindungsgemäße Durchführung in einem Gehäuse, insbesondere in einem Gehäuse für eine elektrische Speichereinrichtung, die sowohl eine Batterie wie aber auch ein Kondensator sein kann, verwandt. Daher stellt die Erfindung auch eine Speichereinrichtung, insbesondere eine Batterie oder einen Kondensator mit einem derartigen Gehäuse zur Verfügung.

Durch den nach außerhalb der Batteriezelle gerichteten Leiter aus Aluminium ist es möglich auf einfache Art und Weise, eine Vielzahl von einzelnen Batteriezellen zu einem Batterieblock , umfassend eine Vielzahl von Batteriezellen zu verbinden. Daher stellt die Erfindung auch eine Anordnung insbesondere einen Batterieblock, umfassend wenigstens zwei Speichereinrichtungen gemäß der Erfindung zur Verfügung, wobei wenigstens zwei Speichereinrichtungen mit einem Verbindungsstück, insbesondere einer Platte aus einem Verbindungsmaterial insbesondere elektrisch und/oder mechanisch verbunden sind. Bevorzugt wird als Verbindungsmaterial Aluminium oder eine Aluminiumlegierung gewählt.

Die Erfindung soll nachfolgend anhand der Zeichnungen beschrieben werden.

Es zeigen:
- Fig. 1: eine erfindungsgemäße Durchführung in einem Batteriegehäuse mit zweigeteiltem Leiter sowie zweigeteiltem Glasmaterial;
- Fig. 2: eine alternative Ausgestaltung eines Batteriezellengehäuses mit einer erfindungsgemäßen Durchführung, zweigeteiltem Leiter und einem einzigen Glasmaterial.

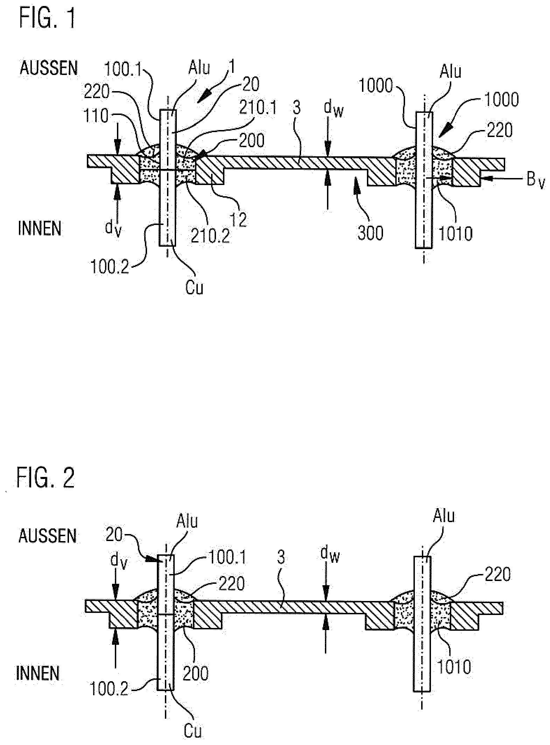

In Fig. 1 ist eine erfindungsgemäße Durchführung 1 dargestellt, die in ein Gehäuse, insbesondere einen Gehäusedeckel 3 eines Speicherzelleninsbesondere Batteriezellengehäuses, eingelassen ist.

Die Dicke des Gehäusedeckels ist mit dw bezeichnet. Wie aus Fig. 1 deutlich ersichtlich ist, ist im Bereich der Durchführung 1 das Batteriezellengehäuse bzw. der Gehäusedeckel 3 verstärkt, d.h. es weist einen Verstärkungsbereich 12 auf, dessen Dicke wesentlich größer ist als die Dicke des Gehäuseteils dw. Die Dicke im Verstärkungsbereich beträgt dv. Die Dicke des Verstärkungsbereiches stellt vorliegend die Einglasungslänge für das Glasmaterial 200 zur Verfügung.

Um den notwendigen Kompressionsdruck aufzubringen, ist im Bereich der Durchführung der Verstärkungsbereich breiter ausgebildet als die Dicke dw, d.h. die Breite Bv des Verstärkungsbereiches ist größer als die Dicke dw des Deckels.

In der Durchführung 1, die an die Kathode angeschlossen ist, ist der stiftförmige Leiter zweigeteilt, nämlich mit einem ersten Bereich 100.1 und einem zweiten Bereich 100.2. Der erste Bereich ist bevorzugt aus Aluminium, der zweite Bereich des stiftförmigen Leiters aus Kupfer. Der in die Speichereinrichtung bzw. Batteriezelle gerichtete Stift, der aus Kupfer ausgebildet ist, wird bevorzugt an eine Kathode angeschlossen. Wie deutlich zu erkennen ist, ist die Übergangsstelle 110 des stiftförmigen Leiters 20 aus zwei Bereichen 100.1, 100.2 im Bereich der Einglasung 200 vorgesehen. Die Einglasung 200 umfasst in der in Fig. 1 dargestellten Ausführungsform zwei Materialien, nämlich ein erstes Glasmaterial 210.1, das auf das Material des ersten Bereiches 100.1 des stiftförmigen Leiters abgestimmt ist und ein zweites Glasmaterial 210.2, das auf den zweiten Bereich 100.2 des stiftförmigen Leiters 20 abgestimmt ist. Das Abstimmen des Glasmaterials erfolgt derart, dass zum einen aufgrund des Kompressionsdruckes des Glasmaterials eine zuverlässige hermetische Dichtheit zur Verfügung gestellt wird, zum anderen Risse in der Einglasung vermieden werden.

Bevorzugt weist das Glasmaterial einen Ausdehnungskoeffizienten α im Bereich 20° C bis 300° C ≥ 13 ·10⁻⁶/K, bevorzugt im Bereich 13 ·10⁻⁶/K bis 25 ·10⁻⁶/K auf.

In nachfolgender Tabelle 1 sind Ausführungsbeispiele für Glaszusammensetzungen angegeben, die besonders bevorzugt sind und sich durch einen thermischen Ausdehnungskoeffizienten im Bereich 13 ·10⁻⁶/K bis 20 ·10⁻⁶/K auszeichnen. Während für die Ausführungsbeispiele AB1 und AB8 der thermische Ausdehnungskoeffizient deutlich über dem für Kupfer mit α = 18 ·10⁻⁶/K liegt, weswegen die Gläser besonders gut für eine hermetisch dichte Druckeinglasung geeignet sind, liegen die Ausführungsbeispiele AB2, AB3, AB4, AB5, AB6, AB7 unterhalb 18 ·10⁻⁶/K Obwohl ein derartiger Wert für α aufgrund von Schrumpfungsprozessen zum aus Kupfer bzw. Aluminium bestehenden Leiter keine hermetische dichte Durchführung erwarten lässt, wurde überraschend festgestellt, dass auch diese Materialien für eine hermetische dichte Druckeinglasung geeignet sind.

**Tabelle 1:**

| Ausführungsbeispiele: | | | | | | | | |
|---|---|---|---|---|---|---|---|---|
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| B₂O₃ | 7.6 | 4.8 | 4.7 | 4.8 | 4.9 | 6.0 | 6,0 | 7,6 |
| Al₂O₃ | 4.2 | 8.6 | 8.7 | 2.0 | 2 | 12.0 | 12,0 | 4,2 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α(20-300° C) (10⁻⁶/K) | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3,02 | 2,63 |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Neben einer geringen Auslaugung zeichnen sich die Gläser auch durch eine hohe Wasserbeständigkeit aus.

Ausführungsbeispiel 1 (AB1) in Tabelle 1 ist insbesondere für Aluminium/Aluminium-Einglasungen geeignet, d.h. Einglasungen eines Aluminiumstiftes als Leiter in einen umgebenden Aluminium-Grundkörper.

Ausführungsbeispiel 6 in Tabelle 1 ist insbesondere für Cu/Al-Einglasungen geeignet, d.h. Einglasung eines Kupferstiftes als Leiter in einen umgebenden Aluminium-Grund körper.

Obwohl einige der Ausführungsbeispiele einen für die Fügung mit Cu tendenziell zu niedrigen Ausdehnungskoeffizienten aufweisen, wird deutlich, dass hohe Li-Anteile in der Schmelze gelöst werden können, ohne dass das Glas mit einer derartigen Glaszusammensetzung instabil wird.

Die Ausführungsbeispiele 7 und 8 (AB7 und AB8) zeichnen sich dadurch aus, dass sie Bi₂O₃ z. B. anstelle von PbO, wie in Ausführungsbeispiel 6 (AB6), enthalten.

Überraschenderweise hat sich gezeigt, dass durch Bi₂O₃ die Wasserbeständigkeit deutlich erhöht werden kann. Durch die Einführung von 1 mol-% Bi₂O₃ konnte beispielsweise eine 10-fach höhere Wasserbeständigkeit beim Ausführungsbeispiel 8 (AB8) gegenüber Ausführungsbeispiel 1 (AB1) erzielt werden, bei im wesentlichen gleichem Alkaligehalt. Für den Fachmann ist dies überraschend.

Bi₂O₃ kann insbesondere auch anstelle von PbO gemäß Ausführungsbeispiel 6 (AB6) verwandt werden. Da Blei umweltschädlich ist, sind Glaszusammensetzungen besonders bevorzugt, die bis auf Verunreinigungen frei von PbO sind, d.h. bei denen PbO zu 0 mol-% gesetzt werden kann. Frei bis auf Verunreinigungen heißt in dieser Anmeldung, dass weniger als 100 ppm, bevorzugt weniger als 10 ppm, insbesondere weniger als 1 ppm des jeweiligen Stoffes, beispielsweise Blei in dem Glas enthalten sind.

Deutlich zu erkennen ist auch, dass die Durchführung 1 eine Abdeckschicht 220 aufweist, die das Glas- oder Glaskeramikmaterial in das der stiftförmige Leiter mit dem Übergang eingeglast ist, umfasst.

Die Abdeckschicht 220 kann sowohl ein Glasmaterial, wie ein Kunststoffmaterial über eine Beschichtung umfassen. Die Abdeckschicht stellt sicher, dass korrosionsanfällige Gläser, wie das erste Glasmaterial 210.1, das beispielsweise ein Phosphatglas sein kann, geschützt werden und z.B. von Wasser weniger angegriffen wird.

Optional und nicht dargestellt wäre es auch möglich ein Abdeckglas auf der zur Innenseite 300 der Speichereinrichtung gerichteten Seite des Glases anzuordnen, um beispielsweise das zweite Glasmaterial 210.2 gegen Angriff des Elektrolyten beispielsweise HF zu schützen.

Durch das Hineinverlegen des Übergangs 110 vom ersten 100.1 zum zweiten Glasmaterial 100.2 in das Glas beziehungsweise Glaskeramikmaterial 200 wird sichergestellt, dass kein Lokalelement ausgebildet wird und Korrosion an den Metallen des Leiters 20 auftritt.

Die in Fig. 1 dargestellte zweite Durchführung 1000 durch den Gehäusedeckel 3, deren Leiter an die Anode angeschlossen ist enthält keinen erfindungsgemäßen zweigeteilten Leiter aus unterschiedlichen Materialien, sondern einen Leiter 1020 aus einem einzigen Material, nämlich Aluminium, der bevorzugt an die Anode angeschlossen ist. Das Glasmaterial ist gegebenenfalls ein einziges Material und ist mit 1010 bezeichnet. Auch dieses Material kann mit einer Abdeckschicht 220 versehen.

In Fig. 2 ist eine alternative Ausgestaltung der Erfindung gezeigt, bei der wiederum ein zweigeteilter Glasstift 20 wie in Fig. 1 in eine Durchführung eingesetzt ist, wobei die Durchführung nur ein einziges Glas oder Glaskeramikmaterial umfasst. Der zweigeteilte Stift 20 umfasst wiederum zwei Bereiche 100.1, 100.2,einen ersten Bereich 100.1, der bevorzugt aus Aluminium bestehen kann und einen zweiten Bereich 100.2 der aus Kupfer bestehen kann und an die Kathode angeschlossen ist.

Vorliegend ist die Kathode der Pluspol der Batteriezelle, da bei einer Batteriezelle elektrische Energie auf Kosten einer anderen Energie - hier der chemischen Energie - gewandelt wird.
Wie schon beim ersten Ausführungsbeispiel in Fig. 1 ist der Gehäusedeckel 3 in einer Dicke dw, dünner ausgebildet, als im Bereich der Einglasung in dem ein Verstärkungsbereich zur Verfügung gestellt wird.

Gleiche Bauteile wie in Fig. 1 und in Fig. 2 sind mit denselben Bezugsziffern bezeichnet.

In der Erfindung wir erstmals eine Durchführung zur Verfügung gestellt, die an der Außenseite des Gehäuses der Speichereinrichtung gleiche Materialien beispielsweise Aluminium umfasst, wohingegen bei den in die Zelle gerichteten Materialien, des Leiters unterschiedliche Material eingesetzt werden können. Dies hat den Vorteil, dass an der Außenseite des Gehäuses einer Speichereinrichtung stets dieselben Anschlüsse verwandt werden können. Hierdurch können beispielsweise an der Außenseite der Batteriezelle Aluminiumanschlüsse zur Verfügung gestellt werden, die sehr leicht mit anderen Materialien, bevorzugt aber Aluminium, verschweißt werden können. Wird an der Außenseite der Batterie erfndungsgemäß Aluminium verwandt, so wird Aluminium auf Aluminium verschweisst, was eine hohe Prozessicherheit zur Folge hat. Desweiteren wird dadurch ein robuster, stabiler Herstellungsprozess gewährleitstet. Darüberhinaus ist eine so hergestellte Verbindung besonders langlebig und ermüdungsfrei. Durch die Einbringung des Überganges von erstem und zweiten Stiftmaterial bzw. Leitermaterial in das Glasmaterial wird eine Korrosion des aus unterschiedlichen Materialien bestehenden Leiters, d.h. Kontaktkorrosion, verhindert.

## Patentansprüche

1. Gehäuse oder Gehäuseteil mit einer Durchführung (1) durch das Gehäuse oder Gehäuseteil (3) eines Gehäuses, insbesondere einer Speichereinrichtung, bevorzugt einer Batterie oder eines Kondensators, wobei das Gehäuse aus einem Leichtmetall besteht und eine Außenseite und eine Innenseite aufweist, und wobei das Gehäuse oder Gehäuseteil (3) wenigstens eine Öffnung aufweist, durch die wenigstens ein Leiter (20) in einem Glas- oder Glaskeramikmaterial (200) hindurchgeführt wird, und wobei der Leiter (20) in axialer Richtung wenigstens zwei Abschnitte aufweist, einen ersten Abschnitt (100.1) aus einem Leichtmetall, bevorzugt aus Aluminium, einer Aluminiumlegierung, AlSiC, Magnesium oder einer Magnesiumlegierung, und einen zweiten Abschnitt (100.2) aus Kupfer oder einer Kupferlegierung, und einem Übergang (110) von dem Leichtmetall zum Kupfer oder zur Kupferlegierung umfasst, und wobei der Übergang (110) im Bereich des Glas- oder Glaskeramikmaterials liegt,
**dadurch gekennzeichnet, dass**
das Glas- oder Glaskeramikmaterial derart ausgewählt ist, dass ein thermischer Ausdehnungskoeffizient α des Glas- oder Glaskeramikmaterials niedriger als ein thermischer Ausdehnungskoeffizient α des Materials des Gehäuses oder des Gehäusebauteils ist, so dass eine Druckeinglasung zur Verfügung gestellt wird, wobei die Einglasung zum Leiter hermetisch dicht ist, wobei der erste Abschnitt des durch die Durchführung hindurch geführten Leiters zur Außenseite ist und der zweite Abschnitt
des durch die Durchführung hindurchgeführten Leiters zur Innenseite hin gerichtet ist.

2. Gehäuse oder Gehäuseteil nach Anspruch 1,
**dadurch gekennzeichnet, dass**
das Glas- oder Glaskeramikmaterial einen thermischen Ausdehnungskoeffizienten α aufweist, der im Bereich 13• 10⁻⁶ /K bis 23 • 10⁻⁶ /K liegt.

3. Gehäuse oder Gehäuseteil nach einem der Ansprüche 1 bis 2,
**dadurch gekennzeichnet, dass**
das Glasmaterial derart ausgewählt wird, dass der thermische Ausdehnungskoeffizient α im Bereich 13 • 10⁻⁶ /K bis 20 • 10⁻⁶/K,
insbesondere 13 • 10⁻⁶/K bis 19 • 10⁻⁶ /K, bevorzugt 13 • 10⁻⁶ /K bis 18 • 10⁻⁶ /K liegt.

4. Gehäuse oder Gehäuseteil nach einem der Ansprüche 1 bis 3,
**dadurch gekennzeichnet, dass**
das Glasmaterial die nachfolgenden Komponenten in mol-% umfasst:
P₂O₅ 35 - 50 mol-%, insbesondere 39-48 mol-%
Al₂O₃ 0 - 14 mol-%, insbesondere 2-12 mol-%
B₂O₃ 2 - 10 mol-%, insbesondere 4-8 mol-%
Na₂O 0-30 mol-%, insbesondere 0-20 mol-%
M₂O 0-20 mol-%, insbesondere 12 - 20 mol-%, wobei M=K, Cs, Rb sein kann
PbO 0 - 10 mol-%, insbesondere 0-9 mol-%
Li₂O 0-45 mol-%, insbesondere 0 - 40 mol-%, ganz bevorzugt 17 - 40 mol-%
BaO 0-20 mol-%, insbesondere 0-20 mol-%, ganz bevorzugt 5-20 mol-%
Bi₂O₃ 0-10 mol-%, insbesondere 1 - 5 mol-%, ganz bevorzugt 2-5 mol-%

5. Gehäuse oder Gehäuseteil nach einem der Ansprüche 1 bis 4,
**dadurch gekennzeichnet, dass**
das Glasmaterial ein einziges Material ist, das bevorzugt einen an das Leichtmetall des ersten Abschnittes (100.1) des Leiters sowie an das Kupfer oder an die Kupferlegierung des zweiten Abschnittes (100.2) des Leiters abgestimmten thermischen Ausdehnungskoeffizienten aufweist.

6. Gehäuse oder Gehäuseteil nach einem der Ansprüche 1 bis 4,
**dadurch gekennzeichnet, dass**
das Glas-oder Glaskeramikmaterial aus zwei Materialien, einem ersten Glas-oder Glaskeramikmaterial (210.1) einem zweiten Glas-oder Glaskeramikmaterial (210.2) besteht, wobei das erste Glasmaterial (210.1) auf den thermischen Ausdehnungskoeffizienten des Leichtmetalls des ersten Abschnittes (100.1) des Leiters und das zweite Glasmaterial (210.2) an den thermischen Ausdehnungskoeffizienten des Kupfers oder der Kupferlegierung zweiten Abschnittes abgestimmt ist.

7. Gehäuse oder Gehäuseteil nach einem der Ansprüche 1 bis 6,
**dadurch gekennzeichnet, dass**
das Glasmaterial (200) wenigstens eine Abdeckschicht (220), bevorzugt eine Glasschicht, insbesondere eine Deckglasschicht, eine Kunststoffschicht oder eine Barrierebeschichtung, oder eine Kombination aus mehreren der vorgenannten Schichten, umfasst.

8. Gehäuse oder Gehäuseteil nach einem der Ansprüche 1 bis 7,
**dadurch gekennzeichnet, dass**
das Gehäuse eine Gehäusedicke (dw) und im Bereich der Öffnung ein Verstärkungsbauteil oder einen Verstärkungsabschnitt umfasst, derart, dass Gehäusedicke und Verstärkungsbauteildicke bzw. Verstärkungsabschnittdicke eine Einglasungslänge (EL) des Glas-oder Glaskeramikmaterials in das Gehäuse bzw. den Gehäuseteil zur Verfügung stellt.

9. Gehäuse oder Gehäuseteil nach Anspruch 8,
**dadurch gekennzeichnet, dass**
das Verstärkungsbauteil oder der Verstärkungsabschnitt eine Breite (Bv) aufweist, die größer ist als die Gehäusedicke (dw).

10. Speichereinrichtung, insbesondere Batterie oder Kondensator, mit einem Gehäuse oder Gehäuseteil nach einem der Ansprüche 1 bis 9.

11. Anordnung umfassend wenigstens zwei Speichereinrichtungen gemäß Anspruch 10,
**dadurch gekennzeichnet, dass**
die wenigstens zwei Speichereinrichtungen mit einem
Verbindungsstück, insbesondere einer Platte aus einem Verbindungsmaterial, elektrisch und/oder mechanisch, verbunden sind.

12. Anordnung nach Anspruch 11,
**dadurch gekennzeichnet, dass**
das Verbindungsmaterial Aluminium oder eine Aluminiumlegierung ist.

## Claims

1. Housing or housing part having a feedthrough (1) through the housing or housing part (3) of a housing, in particular of a storage device, preferably a battery or a capacitor, wherein the housing consists of a light metal and has an outer side and an inner side, and wherein the housing or housing part (3) has at least one opening through which at least one conductor (20) is guided through in a glass or glass ceramic material (200), and wherein the conductor (20) has at least two sections in the axial direction, a first section (100.1) of a light metal, preferably aluminum, an aluminum alloy, AlSiC, magnesium or a magnesium alloy, and a second section (100.2) of copper or a copper alloy, and a transition (110) from the light metal to the copper or the copper alloy, and wherein the transition (110) lies in the region of the glass or glass-ceramic material, **characterized in that**
the glass or glass-ceramic material is selected in such a way that a coefficient of thermal expansion α of the glass or glass-ceramic material is lower than a coefficient of thermal expansion α of the material of the housing or the housing component, such that a pressure glass feedthrough is provided, wherein the pressure glass feedthrough is hermetically sealed to the conductor, wherein the first section of the conductor passing through the feedthrough is towards the outside and the second section of the conductor guided through the feedthrough is directed towards the inside.

2. Housing or housing part according to claim 1, **characterized in that** the glass or glass ceramic material has a coefficient of thermal expansion α which is in the range 13 • 10⁻⁶ /K to 23 • 10⁻⁶/K.

3. Housing or housing part according to one of claims 1 to 2, **characterized in that** the glass material is selected in such a way that the coefficient of thermal expansion α lies in the range 13 • 10⁻⁶/K to 20 • 10⁻⁶/K, in particular 13 • 10⁻⁶/K to 19 • 10⁻⁶/K, preferably 13 • 10⁻⁶/K to 18 • 10⁻⁶/K.

4. Housing or housing part according to one of claims 1 to 3, **characterized in that** the glass material comprises the following components in mol-%:
• P₂O₅ 35-50 mol-%, in particular 39-48 mol-%
• Al₂O₃ 0-14 mol-%, in particular 2-12 mol-%
• B₂O₃ 2-10 mol-%, in particular 4-8 mol-%
• Na₂O 0-30 mol%, in particular 0-20 mol%
• M₂O 0-20 mol%, in particular 12-20 mol%, wherein it is possible that M=K, Cs, Rb
• PbO 0-10 mol-%, in particular 0-9 mol-%
• Li₂O 0-45 mol-%, in particular 0-40 mol-%, very preferably 17-40 mol-%
• BaO 0-20 mol-%, in particular 0-20 mol-%, very preferably 5-20 mol-%
• Bi₂O₃ 0-10 mol-%, in particular 1-5 mol-%, very preferably 2-5 mol-%.

5. Housing or housing part according to one of claims 1 to 4, **characterized in that** the glass material is a single material which preferably has a coefficient of thermal expansion matched to the light metal of the first section (100.1) of the conductor and to the copper or copper alloy of the second section (100.2) of the conductor.

6. Housing or housing part according to one of claims 1 to 4, **characterized in that** the glass or glass ceramic material consists of two materials, a first glass or glass ceramic material (210.1) and a second glass or glass ceramic material (210.2), wherein the first glass material (210. 1) is matched to the coefficient of thermal expansion of the light metal of the first section (100.1) of the conductor and the second glass material (210.2) is matched to the coefficient of thermal expansion of the copper or copper alloy of the second section.

7. Housing or housing part according to one of claims 1 to 6, **characterized in that** the glass material (200) comprises at least one cover layer (220), preferably a glass layer, in particular a cover glass layer, a plastic layer or a barrier coating, or a combination of several of the aforementioned layers.

8. Housing or housing part according to one of claims 1 to 7, **characterized in that** the housing has a housing thickness (dw) and, in the region of the opening, a reinforcing component or a reinforcing section, such that housing thickness and reinforcing component thickness or reinforcing section thickness provide a glass feedthrough length (EL) of the glass or glass ceramic material into the housing or housing part.

9. Housing or housing part according to claim 8, **characterized in that** the reinforcing component or reinforcing section has a width (Bv) which is greater than the housing thickness (dw).

10. Storage device, in particular battery or capacitor, comprising a housing or housing part according to one of claims 1 to 9.

11. Arrangement, comprising at least two storage devices according to claim 10, **characterized in that** the at least two storage devices are connected, in particular electrically and/or mechanically, with a connecting piece, in particular a plate made of a connecting material.

12. Arrangement according to claim 11, **characterized in that** the connecting material is aluminum or an aluminum alloy.

## Revendications

1. Boîtier ou partie de boîtier avec une traversée (1) à travers le boîtier ou la partie de boîtier (3) d'un boîtier, en particulier d'un dispositif d'accumulation, de préférence d'une batterie ou d'un condensateur, lequel boîtier se compose d'un métal léger et présente une face extérieure et une face intérieure, le boîtier ou la partie de boîtier (3) présentant au moins une ouverture à travers laquelle un conducteur (20) est passé dans un matériau à base de verre ou de vitrocéramique (200), lequel conducteur (20) présente au moins deux segments dans le sens axial, un premier segment (100.1) fait d'un métal léger, de préférence d'aluminium, d'un alliage d'aluminium, d'AlSiC, de magnésium ou d'un alliage de magnésium, et un deuxième segment (100.2) fait de cuivre ou d'un alliage de cuivre, et comprend une transition (110) du métal léger au cuivre ou à l'alliage de cuivre, la transition (110) se trouvant au niveau du matériau à base de verre ou de vitrocéramique,
**caractérisé en ce que**
le matériau à base de verre ou de vitrocéramique est choisi de telle manière que son coefficient de dilatation thermique α soit plus bas que le coefficient de dilatation thermique α du boîtier ou de la partie de boîtier, de façon à produire une vitrification comprimée qui est hermétique vis-à-vis du conducteur, le premier segment du conducteur passé à travers la traversée étant orienté vers l'extérieur et le deuxième segment du conducteur passé à travers la traversée étant orienté vers l'intérieur.

2. Boîtier ou partie de boîtier selon la revendication 1,
**caractérisé en ce que**
le matériau à base de verre ou de vitrocéramique présente un coefficient de dilatation thermique compris entre 13 × 10⁻⁶/K et 23 × 10⁻⁶/K.

3. Boîtier ou partie de boîtier selon l'une des revendications 1 à 2,
**caractérisé en ce que**
le matériau à base de verre est choisi de telle manière que le coefficient de dilatation thermique se situe entre 13 × 10⁻⁶/K et 20 × 10⁻⁶/K, en particulier entre 13 × 10⁻⁶/K et 19 × 10⁻⁶/K, de préférence entre 13 × 10⁻⁶/K et 18 × 10⁻⁶/K.

4. Boîtier ou partie de boîtier selon l'une des revendications 1 à 3,
**caractérisé en ce que**
le matériau à base de verre comprend les composants suivants, en pourcentages molaires :
• P₂O₅ 35 à 50 % molaires, en particulier 39 à 48 % molaires
• Al₂O₃ 0 à 14 % molaires, en particulier 2 à 12 % molaires
• B₂O₃ 2 à 10 % molaires, en particulier 4 à 8 % molaires
• Na₂O 0 à 30 % molaires, en particulier 0 à 20 % molaires
• M₂O 0 à 20 % molaires, en particulier 12 à 20 % molaires, où M peut être K, Cs, Rb
• PbO 0 à 10 % molaires, en particulier 0 à 9 % molaires
• Li₂O 0 à 45 % molaires, en particulier 0 à 40 % molaires, de préférence 17 à 40 % molaires
• BaO 0 à 20 % molaires, en particulier 0 à 20 % molaires, de préférence 5 à 20 % molaires
• Bi₂O₃ 0 à 10 % molaires, en particulier 1 à 5 % molaires, de préférence 2 à 5 % molaires

5. Boîtier ou partie de boîtier selon l'une des revendications 1 à 4,
**caractérisé en ce que**
le matériau à base de verre est un seul matériau, qui présente de préférence un coefficient de dilatation thermique adapté au métal léger du premier segment (100.1) du conducteur ainsi qu'au cuivre ou à l'alliage de cuivre du deuxième segment (100.2).

6. Boîtier ou partie de boîtier selon l'une des revendications 1 à 4,
**caractérisé en ce que**
le matériau à base de verre ou de vitrocéramique se compose de deux matériaux, un premier matériau à base de verre ou de vitrocéramique (210.1) et un deuxième matériau à base de verre ou de vitrocéramique (210.2), le premier matériau à base de verre (210.1) étant adapté au coefficient de dilatation thermique du métal léger du premier segment (100.1) du conducteur et le deuxième matériau à base de verre (210.2) au coefficient de dilatation thermique du cuivre ou de l'alliage de cuivre du deuxième segment.

7. Boîtier ou partie de boîtier selon l'une des revendications 1 à 6,
**caractérisé en ce que**
le matériau à base de verre (200) comprend une couche de couverture (220), de préférence une couche de verre, en particulier une couche de verre de couverture, une couche de plastique ou un revêtement de barrière, ou une combinaison de plusieurs desdites couches.

8. Boîtier ou partie de boîtier selon l'une des revendications 1 à 7,
**caractérisé en ce que**
le boîtier présente une épaisseur de boîtier (dw) et comprend au niveau de l'ouverture un élément de renfort ou un segment de renfort, de telle sorte que l'épaisseur du boîtier et l'épaisseur de l'élément de renfort ou l'épaisseur du segment de renfort créent une longueur de vitrification (EL) du matériau à base de verre ou de vitrocéramique dans le boîtier ou la partie de boîtier.

9. Boîtier ou partie de boîtier selon la revendication 8,
**caractérisé en ce que**
l'élément de renfort ou le segment de renfort présente une largeur (Bv) supérieure à l'épaisseur (dw) du boîtier.

10. Dispositif d'accumulation, en particulier batterie ou condensateur, avec un boîtier ou une partie de boîtier selon l'une des revendications 1 à 9.

11. Disposition comprenant au moins deux dispositifs d'accumulation selon la revendication 10,
**caractérisée en ce que**
les au moins deux dispositifs d'accumulation sont reliés, en particulier électriquement et/ou mécaniquement, par une pièce de liaison, en particulier une plaque faite d'un matériau de liaison.

12. Disposition selon la revendication 11,
**caractérisée en ce que**
le matériau de liaison est de l'aluminium ou un alliage d'aluminium.
